(19) Europäisches Patentamt / European Patent Office / Office européen des brevets

(11) **EP 2 443 835 B1**

(12) **FASCICULE DE BREVET EUROPEEN**

(45) Date de publication et mention de la délivrance du brevet:
**05.04.2017 Bulletin 2017/14**

(21) Numéro de dépôt: **10734256.0**

(22) Date de dépôt: **17.06.2010**

(51) Int Cl.:
***H04N 19/52*** *(2014.01)*

(86) Numéro de dépôt international:
**PCT/FR2010/051209**

(87) Numéro de publication internationale:
**WO 2010/146314 (23.12.2010 Gazette 2010/51)**

(54) **CODAGE DE VECTEURS MOUVEMENT PAR COMPÉTITION DE PRÉDICTEURS**

BEWEGUNGSVEKTORKODIERUNG DURCH WETTBEWERB ZWISCHEN VERSCHIEDENEN PREDIKTOREN

MOTION VECTOR CODING BY COMPETITION WITHIN A SET OF PREDICTORS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.06.2009 FR 0954194**

(43) Date de publication de la demande:
**25.04.2012 Bulletin 2012/17**

(73) Titulaire: **Orange**
**75015 Paris (FR)**

(72) Inventeurs:
• **PATEUX, Stéphane**
  **F-35700 Rennes (FR)**
• **CLARE, Gordon**
  **F-35740 Pace (FR)**
• **JUNG, Joël**
  **F-78320 Le Mesnil Saint Denis (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**WO-A-2008/082158**

• **JOEL JUNG ET AL: "Competition-Based Scheme for Motion Vector Selection and Coding" JOINT VIDEO TEAM (JVT) OF ISO/IEC MPEG & ITU-T VCEG(ISO/IEC JTC1/SC29/WG11 AND ITU-T SG16 Q6), XX, XX, no. VCEG-AC06r1, 2 août 2006 (2006-08-02), XP030003490 cité dans la demande**

## Description

### 1. Domaine de l'invention

Le domaine de l'invention est celui du codage et du décodage d'image, et notamment de flux vidéo constitués d'une série d'images successives. Plus précisément, l'invention s'applique à la compression d'images ou de séquences d'images utilisant des transformées par bloc exploitant différents modes de codage.

L'invention peut ainsi, notamment, s'appliquer au codage vidéo mis en oeuvre dans les codeurs vidéo actuels (MPEG, H.264, etc) ou à venir (ITU-T/VCEG (H.265) ou ISO/MPEG (HVC).

### 2. Art antérieur

On connaît déjà des schémas de codage d'image (JPEG, JPEG-XR), ou de codage vidéo hybride (MPEG, H264), ainsi que des techniques de compression de données vidéo. Parmi celles-ci, de nombreuses techniques de codages vidéo utilisent une représentation par bloc de la séquence vidéo, par exemple celles mettant en oeuvre les standards de compression vidéo issus de l'organisation MPEG (MPEG-1, MPEG-2, MPEG-4 part 2, ...) ou de l'ITU-T (H.261, ..., H.264/AVC).

Ainsi, selon la technique H.264 et comme illustré en figure la, chaque image 1 peut être découpée en tranches (en anglais « slice »), elles-mêmes découpées en macroblocs 10, qui sont ensuite subdivisés en blocs 11. Un bloc est constitué d'un ensemble de pixels.

Le codage d'un bloc est classiquement réalisé à l'aide d'une prédiction du bloc et d'un codage d'un résidu de prédiction à ajouter à la prédiction. La prédiction est établie à l'aide d'informations déjà reconstruites (blocs précédents déjà codés/décodés dans l'image courante, images préalablement codées dans le cadre d'un codage vidéo, etc).

Dans un schéma de codage donné, plusieurs modes de codage différents peuvent être mis en oeuvre pour le codage des blocs. Un mode de codage comprend généralement deux phases, une première phase de prédiction des échantillons à coder, suivie d'une deuxième phase de codage de résidus de prédiction. Typiquement, les blocs peuvent être codés par différents modes de codage, comme les modes de codage « intra », « inter », « saut » (en anglais « skip »), etc.

Pour ces différents modes de codage, la première phase de prédiction des échantillons correspond typiquement à :

- une prédiction temporelle, c'est-à-dire en référence à un bloc de référence appartenant à une ou plusieurs autres images ; et/ou
- une prédiction spatiale, en fonction des blocs voisins du bloc à coder de l'image courante.

Dans ce dernier cas, la prédiction ne peut être effectuée qu'à partir des blocs qui ont été précédemment codés.

Le mode de codage dit « intra » n'utilise que les informations contenues dans l'image elle-même. En d'autres termes, la prédiction d'un bloc d'une image codée en mode intra a recours aux blocs voisins précédemment codés de la même image. Par exemple, un bloc courant est codé par l'intermédiaire d'une valeur de texture des blocs voisins déjà codés-décodés.

Le mode de codage dit « inter » utilise une prédiction à l'aide d'une compensation de mouvement sur la base d'images précédemment codées. Plus précisément, ce type de codage consiste à considérer une (ou plusieurs) image de référence. Un déplacement ou mouvement entre l'image de référence et l'image courante est établi pour un bloc à coder de l'image courante. Le bloc servant de prédiction au bloc à coder est le bloc de pixels de l'image de référence déplacé du vecteur de mouvement.

Le mode de codage dit « saut » est un mode particulier du mode de codage « inter » et réalise une prédiction temporelle pour laquelle aucune information n'est transmise au décodeur. En d'autres termes, il est possible de « sauter » un bloc, si des informations de codage de base ont déjà été déterminées pour ce bloc. Dans ce mode de codage, la prédiction est réalisée à partir d'une compensation en mouvement du bloc courant à l'aide des vecteurs de mouvement des blocs voisins s'ils existent dans l'image de référence, et aucun résidu de prédiction n'est codé ou décodé.

Pour un mode de codage donné, des paramètres de prédiction sont alors établis, puis codés. Par exemple, selon la technique H.264, on peut coder des paramètres de prédiction pour chaque bloc, comme le mode de codage (« intra », « inter », « skip »), le type de partitionnement, des informations concernant la prédiction (orientation, image de référence, ...), des informations de mouvement (vecteur mouvement), des informations de texture (direction d'extrapolation des valeurs de texture), des coefficients codés, etc.

Selon la technique H.264, des images I sont codées par prédiction spatiale (prédiction « intra »), des images P et B sont codées par prédiction temporelle par rapport à d'autres images I, P ou B codées-décodées à l'aide d'une compensation en mouvement.

Lors du codage de ces paramètres de prédiction (par exemple le vecteur mouvement du bloc), afin de réduire leur coût de codage, une prédiction de leur valeur est réalisée à partir des valeurs des mêmes paramètres de prédiction pour les blocs voisins déjà codés, et ayant le même mode de codage (par exemple les vecteurs mouvement des blocs voisins).

Par exemple, le vecteur mouvement utilisé sur un bloc codé en mode « inter » est codé à l'aide d'un codage prédictif tel que le suivant :

- dans un premier temps, un vecteur de prédiction pour le vecteur mouvement du bloc considéré est établi. Typiquement, un tel vecteur, appelé prédicteur médian, est défini à partir des valeurs médianes des composantes des vecteurs mouvement de blocs voisins déjà codés ;

- dans un deuxième temps, l'erreur de prédiction, c'est-à-dire la différence entre le vecteur mouvement du bloc courant et le vecteur de prédiction précédemment établi, est codée.

Une extension de cette technique de prédiction du vecteur mouvement est proposée par J. Jung et G. Laroche dans le document « Competition-Based-Scheme for Motion Vector Selection and Coding », ITU-T VCEG, AC06, July 2006.

Cette technique consiste à mettre en compétition plusieurs prédicteurs, ou vecteurs candidats de prédiction (au-delà du prédicteur médian utilisé par AVC), et à signaler, parmi l'ensemble de vecteurs candidats de prédiction, quel est le vecteur utilisé effectivement.

Cependant, avec cette technique de codage par compétition, la définition de l'ensemble de prédicteurs est délicate. En effet, le fait d'augmenter le nombre de ces candidats (via un ensemble plus grand) permet d'avoir une meilleure prédiction, mais au détriment d'un coût de signalisation du prédicteur à utiliser plus élevé.

Il existe donc un besoin pour une nouvelle technique permettant notamment d'obtenir de meilleures performances de codage d'un bloc donné, tout en limitant le coût de la signalisation, et donc d'offrir une meilleure efficacité de compression.

Le brevet WO2008/082158 propose la sélection d'un prédicteur du vecteur mouvement pour un bloc à coder parmi un ensemble de vecteurs mouvement associés aux blocs avoisinants ce bloc à coder.

## 3. Exposé de l'invention

L'invention propose une solution nouvelle qui ne présente pas l'ensemble de ces inconvénients de l'art antérieur, sous la forme d'un procédé de codage d'un signal d'images comprenant des informations de mouvement, par sélection d'un vecteur mouvement parmi un ensemble d'au moins trois vecteurs candidats, pour au moins un bloc courant d'une image courante à coder, comprenant une étape de détermination d'un sous-ensemble de sélection optimale, contenant une partie desdits vecteurs candidats, une étape de sélection dudit vecteur mouvement parmi les vecteurs dudit sous-ensemble de sélection optimale, et une étape d'insertion, dans ledit signal, d'une information de désignation du vecteur mouvement sélectionné parmi les vecteurs dudit sous-ensemble de sélection optimale.

Selon l'invention, l'étape de détermination comprend les sous-étapes suivantes :

- comparaison d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

- si ladite information de proximité prend ladite première valeur, construction dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
- si ladite information de proximité prend ladite seconde valeur, construction dudit sous-ensemble de sélection optimale avec lesdits premiers vecteurs candidats.

Ainsi, l'invention repose sur une approche nouvelle et inventive du codage de signal d'images, et plus particulièrement du codage prédictif de vecteurs mouvement par compétition, permettant d'obtenir une meilleure prédiction grâce à un choix de vecteurs mouvement plus grand, tout en offrant une plus grande efficacité de compression, selon une méthode implémentée dans un émetteur et reproductible par au moins un récepteur.

En effet, l'invention est basée sur un ensemble de vecteurs mouvement localement adaptatif, c'est-à-dire par bloc d'image, permettant un choix du vecteur mouvement parmi un ensemble de vecteurs mouvement mieux adapté, noté sous-ensemble de sélection optimale, tout en limitant le coût de la signalisation du vecteur mouvement à utiliser.

Ainsi, le procédé de codage selon l'invention permet de proposer, pour un bloc de l'image à coder, un sous-ensemble de vecteurs mouvement candidats plus adapté, par exemple lorsque les premiers vecteurs mouvement candidats sont proches ou égaux, selon le critère prédéterminé.

La prédiction est optimisée, le choix du vecteur mouvement étant effectué parmi ce sous-ensemble de sélection optimale, contenant a priori de meilleurs candidats.

Selon une caractéristique particulière de l'invention, lesdits premiers vecteurs candidats appartiennent à un sous-ensemble de vecteurs candidats associés à au moins un des blocs voisins dudit bloc courant, de position pré-identifiée dans l'espace et/ou dans le temps.

Ainsi, les premiers vecteurs mouvement candidats peuvent par exemple être associés :

- au bloc situé à gauche du bloc courant (noté A) ;
- au bloc situé au dessus du bloc courant (noté B) ;
- au bloc situé au dessus et à droite du bloc courant (noté C) ;
- au bloc situé au dessus et à gauche du bloc courant (noté D),
- à un bloc de l'image précédant l'image courante, appelée image de référence, et situé à la même position que ledit bloc courant (noté T).

Les premiers vecteurs mouvement candidats peuvent également être construits à partir des valeurs médianes des composantes de certains ou de tous les vecteurs mouvement associés aux blocs A, B, C et D (le vecteur mouvement « médian »).

Les premiers vecteurs mouvement candidats peuvent également être associés à un bloc de l'image précédant l'image courante et situé à la même position que ledit bloc courant, déplacé du vecteur de mouvement (compensé en mouvement), ou correspondre à des vecteurs issus d'une technique de « Template Matching », etc.

Selon un mode de réalisation particulier de l'invention, ledit premier sous-ensemble comprend le vecteur candidat associé au bloc (A) situé directement à gauche dudit bloc courant dans l'image courante et le vecteur candidat associé au bloc (B) situé directement au-dessus dudit bloc courant dans l'image courante.

Selon une caractéristique particulière de l'invention, ledit second vecteur candidat est un vecteur associé à un bloc de l'image précédant l'image courante et situé à la même position que ledit bloc courant.

Ainsi, le second vecteur mouvement candidat peut par exemple être associé au bloc (T).

Ce mode de réalisation est dénommé « AB plus T », car il utilise un premier ensemble « par défaut » comprenant les vecteurs mouvement candidats associés aux blocs (A) et (B), puis un second vecteur mouvement candidat associé au bloc (T), si les vecteurs mouvement candidats associés aux blocs (A) et (B) sont égaux ou proches.

Selon une caractéristique particulière de l'invention, la mise en oeuvre dudit critère prédéterminé appartient au groupe comprenant l'égalité entre lesdits premiers vecteurs candidats et la comparaison de la différence entre lesdits premiers vecteurs candidats avec un premier seuil prédéterminé.

Ainsi, lorsque les premiers vecteurs mouvement sont égaux, il est préférable de proposer un autre vecteur mouvement candidat, pour proposer un réel choix de vecteurs mouvement (entre l'un des premiers vecteurs mouvement égaux et cet autre vecteur candidat) dans un sous-ensemble de sélection optimale, en vue de leur mise en compétition.

De même, lorsque les premiers vecteurs mouvement sont proches, il est a priori préférable de proposer un autre vecteur mouvement candidat, pour proposer un choix de vecteurs mouvement suffisamment éloignés (entre l'un des premiers vecteurs mouvement proches et cet autre vecteur candidat), et ainsi optimiser la mise en compétition des vecteurs mouvement candidats.

Selon un mode de réalisation particulier de l'invention, ladite étape de comparaison est répétée au moins une fois, sur un second sous-ensemble comprenant un desdits premiers vecteurs candidats et au moins un second vecteur candidat, distinct desdits premiers vecteurs candidats.

Ainsi, l'invention permet de proposer dans un sous-ensemble de sélection optimale des vecteurs mouvement candidats distincts et suffisamment éloignés.

Par exemple, lorsque les premiers vecteurs mouvement candidats sont proches, ou égaux, et que les vecteurs mouvement candidats du deuxième sous-ensemble construit le sont aussi, l'invention permet de construire un troisième sous-ensemble, le sous-ensemble de sélection optimale, présentant des vecteurs mouvement candidats suffisamment éloignés.

Selon un mode de réalisation de l'invention, ladite étape de détermination d'un sous-ensemble de sélection optimale comprend une sous-étape de rejet d'un vecteur candidat si ce dernier présente une différence avec au moins un autre vecteur candidat supérieure à un deuxième seuil prédéterminé.

Ainsi, l'invention permet également de ne pas proposer un sous-ensemble de sélection optimale comprenant des vecteurs mouvement candidats trop éloignés les uns des autres (ce qui rendrait difficile la mise en compétition de ces deux vecteurs candidats lors de l'étape de sélection), en comparant les vecteurs mouvement candidats destinés à être présents dans ce sous-ensemble de sélection optimale.

Un autre aspect de l'invention concerne un programme d'ordinateur comportant des instructions pour la mise en oeuvre du procédé de codage tel que décrit ci-dessus, lorsque ledit programme est exécuté par un processeur.

On note en effet que le procédé de codage selon l'invention peut être mis en oeuvre de diverses manières, notamment sous forme câblée ou sous forme logicielle.

Un autre aspect de l'invention concerne un dispositif de codage d'un signal d'images comprenant des informations de mouvement, par sélection d'un vecteur mouvement parmi un ensemble d'au moins trois vecteurs candidats, pour au moins un bloc courant d'une image courante à coder, comprenant des moyens de détermination d'un sous-ensemble de sélection optimale, contenant une partie desdits vecteurs candidats, des moyens de sélection dudit vecteur mouvement parmi les vecteurs dudit sous-ensemble de sélection optimale, et des moyens d'insertion, dans ledit signal, d'une information de désignation du vecteur mouvement sélectionné parmi les vecteurs dudit sous-ensemble de sélection optimale.

Selon l'invention, les moyens de détermination comprennent les moyens suivants :

- des moyens de comparaison d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

  - si ladite information de proximité prend ladite première valeur, des moyens de construction dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
  - si ladite information de proximité prend ladite seconde valeur, des moyens de construction dudit sous-ensemble de sélection optimale avec lesdits premiers vecteurs candidats.

Un tel dispositif de codage est notamment adapté à mettre en oeuvre le procédé de codage décrit précédemment. Il s'agit par exemple d'un codeur vidéo de type MPEG ou H.264, ou selon une future norme de compression.

Ce dispositif de codage pourra bien sûr comporter les différentes caractéristiques relatives au procédé de codage selon l'invention.

Un autre aspect de l'invention concerne un procédé de décodage d'informations de mouvement, par sélection d'un vecteur mouvement sélectionné au codage parmi un ensemble d'au moins trois vecteurs candidats, pour au moins un bloc courant d'une image courante à décoder, comprenant une étape de détermination d'un sous-ensemble de sélection optimale, contenant une partie desdits vecteurs candidats, de façon similaire à une détermination mise en oeuvre au codage, une étape de lecture d'une information de sélection fournie par le codage et désignant l'un des vecteurs dudit sous-ensemble de sélection optimale et une étape de sélection dudit vecteur mouvement parmi les vecteurs dudit sous-ensemble de sélection optimale à partir de ladite information de sélection lue.

Selon l'invention, l'étape de détermination comprend les sous-étapes suivantes :

- comparaison d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

  - si ladite information de proximité prend ladite première valeur, construction dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
  - si ladite information de proximité prend ladite seconde valeur, construction dudit sous-ensemble de sélection optimale avec lesdits premiers vecteurs candidats.

De cette façon, la technique de décodage selon l'invention permet, à réception et lecture des informations de codage, et plus particulièrement d'une information de sélection, de déterminer le vecteur mouvement correspondant au bloc courant en cours de décodage, parmi un sous-ensemble de sélection optimale déterminé par la même méthode que celle implémentée par le procédé de codage.

Un autre aspect de l'invention concerne un programme d'ordinateur comportant des instructions pour la mise en oeuvre du procédé de décodage tel que décrit ci-dessus, lorsque ledit programme est exécuté par un processeur.

On note en effet que le procédé de décodage selon l'invention peut être mis en oeuvre de diverses manières, notamment sous forme câblée ou sous forme logicielle.

Ce procédé de décodage pourra bien sûr comporter les différentes caractéristiques relatives au procédé de codage selon l'invention.

Dans un autre mode de réalisation, l'invention concerne un dispositif de décodage d'informations de mouvement, par sélection d'un vecteur mouvement sélectionné au codage parmi un ensemble d'au moins trois vecteurs candidats, pour au moins un bloc courant d'une image courante à décoder, comprenant des moyens de détermination d'un sous-ensemble de sélection optimale, contenant une partie desdits vecteurs candidats, de façon similaire à une détermination mise en oeuvre au codage, des moyens de lecture d'une information de sélection fournie par le codage et désignant l'un des vecteurs dudit sous-ensemble de sélection optimale et des moyens de sélection dudit vecteur mouvement parmi les vecteurs dudit sous-ensemble de sélection optimale à partir de ladite information de sélection lue.

Selon l'invention, les moyens de détermination comprennent les moyens suivants :

des moyens de comparaison d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

- si ladite information de proximité prend ladite première valeur, des moyens de construction dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
- si ladite information de proximité prend ladite seconde valeur, des moyens de construction dudit sous-ensemble de sélection optimale avec lesdits premiers vecteurs candidats.

Un tel dispositif de décodage est notamment adapté à mettre en oeuvre le procédé de décodage décrit précédemment. Il s'agit par exemple d'un décodeur vidéo de type MPEG ou H.264, ou selon une future norme de compression vidéo.

Ce dispositif de décodage pourra bien sûr comporter les différentes caractéristiques relatives au procédé de décodage selon l'invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure la, déjà commentée en relation avec l'art antérieur, présente le découpage d'une image en un ensemble de blocs ;
- la figure 1b illustre des exemples de relations de voisinage pour un bloc donné ;
- la figure 2a présente les principales étapes du procédé de codage, selon un mode de réalisation de l'invention ;
- la figure 2b présente des étapes plus détaillées du procédé de codage, selon ce mode de réalisation de l'invention ;
- la figure 3a présente les principales étapes du procédé de décodage, selon un mode de réalisation de l'invention ;
- la figure 3b présente des étapes plus détaillées du procédé de décodage, selon ce mode de réalisation de l'invention ;
- les figures 4 et 5 présentent respectivement la structure d'un dispositif de codage et d'un dispositif de décodage, selon un mode de réalisation particulier de l'invention.

## 5. Description d'un mode de réalisation de l'invention

### 5.1 Prirtcipe général

Le principe général de l'invention repose sur l'utilisation d'un ensemble de prédicteurs (encore appelés vecteurs mouvement candidats) localement adaptatif, pour la sélection d'un vecteur mouvement par compétition de vecteurs mouvement. Selon l'invention, l'adaptation peut être effectuée pour chaque bloc d'une image à coder, en fonction des valeurs des vecteurs mouvement candidats d'un premier ensemble de prédicteurs.

Ainsi, selon l'invention, le codage des informations de mouvement par compétition de vecteurs mouvement est basé sur une adaptation automatique, d'un bloc à l'autre au sein d'une image à coder, d'un ensemble de prédicteurs à utiliser pour la mise en compétition.

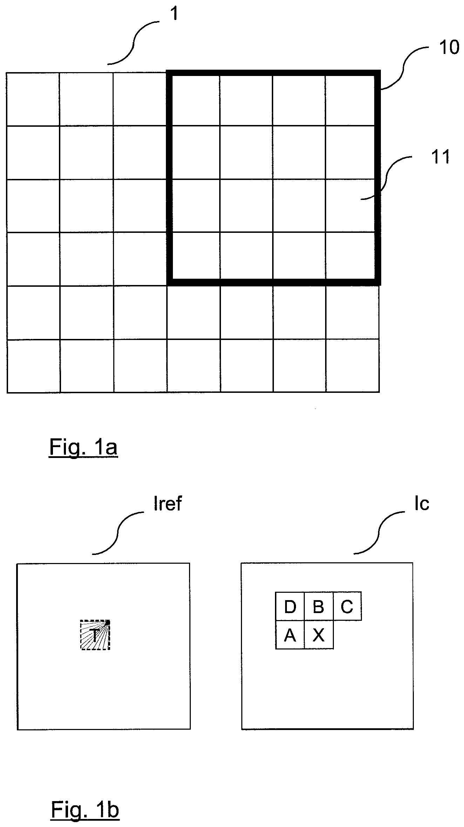

De manière classique pour un codage prédictif de vecteurs mouvement par compétition, on considère un ensemble de vecteurs mouvement candidats, parmi lesquels un vecteur mouvement est sélectionné et codé, pour un bloc d'une image à coder. Ces vecteurs mouvement candidats peuvent être associés à au moins un des blocs voisins dudit bloc courant, de position pré-identifiée dans l'espace et/ou dans le temps, comme illustré en figure 1b.

Par exemple, les vecteurs mouvement candidats pour le codage du bloc courant X de l'image courante Ic peuvent être associés aux blocs voisins dans l'espace (A), (B), (C) ou (D), et/ou au bloc voisin temporellement (T) de l'image de référence Iref.

Les vecteurs mouvement candidats peuvent également être associés à un bloc de l'image précédant l'image courante et situé à la même position que ledit bloc courant, déplacé du vecteur de mouvement (compensé en mouvement), ou correspondre à des vecteurs issus d'une technique de « Template Matching », etc.

*5.2 Description de modes de réalisation du procédé de codage*

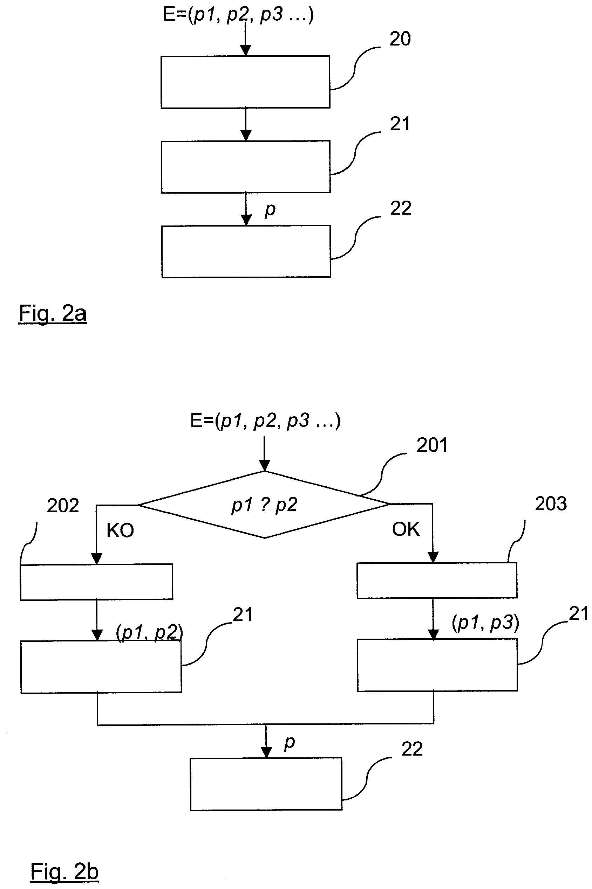

Selon un mode de réalisation de l'invention, et comme illustré en figure 2a, pour un bloc courant d'une image à coder, un ensemble E de vecteurs mouvement candidats (*p1*, *p2*, *p3*, ...) est disponible, afin de sélectionner le vecteur mouvement à coder pour le bloc considéré.

Une première étape 20 de détermination d'un sous-ensemble de vecteurs mouvement candidats, à partir de l'ensemble E, est mise en oeuvre, délivrant un sous-ensemble de détection optimale. Cette étape 20 de détermination est décrite plus en détails ci-dessous, en relation avec la figure 2b.

Une fois ce sous-ensemble de détection optimale déterminé, les vecteurs mouvement candidats qu'il contient sont mis en compétition, selon une technique connue (décrite par exemple dans le document « Competition-Based Scheme for Motion Vector Selection and Coding », ITU-T VCEG, AC06, July 2006 de J. Jung et G. Laroche, déjà mentionné en relation avec l'art antérieur), afin de sélectionner, lors d'une étape 21, un vecteur mouvement *p* à coder pour le bloc considéré.

Enfin, lors d'une étape 22, une information de désignation de ce vecteur mouvement *p* sélectionné est insérée dans le signal, afin de permettre au dispositif de décodage de sélectionner également ce vecteur mouvement, pour le décodage du bloc considéré.

On présente maintenant plus en détails les différentes sous-étapes permettant la construction du sous-ensemble de détection optimale, en relation avec la figure 2b.

Le principe repose sur la comparaison, lors d'une étape 201, d'au moins deux premiers vecteurs mouvement de l'ensemble E, noté par exemple *p1* et *p2*. Il est à noter que cette comparaison peut également être effectuée pour un plus grand nombre de vecteurs mouvement, selon le nombre de vecteurs mouvement que l'on souhaite ensuite mettre en compétition. Le choix du nombre de vecteurs mouvement engendre un coût de signalisation plus ou moins élevé, et est donc défini en fonction des performances souhaitées pour le codage des informations de mouvement notamment, et donc des performances de compression souhaitées.

Cette première étape de comparaison permet de déterminer si ces deux premiers vecteurs mouvement *p1* et *p2* sont susceptibles de former un ensemble de vecteurs mouvement optimal, en vue de leur mise en compétition.

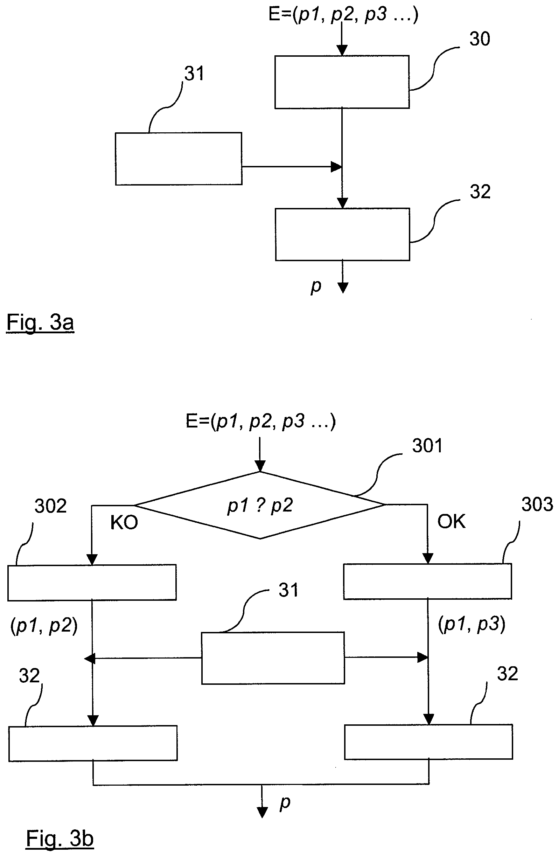

Par exemple, *p1* peut être associé au bloc (A) et *p2* au bloc (B) de l'image courante (cf figure 1b). Ce choix est prédéterminé et connu du décodeur, de manière à ce que celui-ci puisse mettre en oeuvre une méthode de décodage identique à la méthode de codage implémentée. En effet, comme décrit ci-dessous en relation avec les figures 3a et 3b, le procédé de décodage met en oeuvre les mêmes étapes que le procédé de codage, et le décodeur connaît un certain nombre de paramètres utilisés par le codeur, afin d'optimiser les coûts de signalisation.

Selon une première variante de ce mode de réalisation, cette étape de comparaison 201 consiste en un test d'égalité des deux premiers vecteurs mouvement *p1* et *p2*.

En effet, dans un premier cas, si *p1* et *p2* sont identiques, l'étape 21 de mise en compétition de ces deux vecteurs n'est pas nécessaire et délivre forcément *p1=p2* comme vecteur mouvement à coder pour le bloc courant considéré. Il est donc intéressant dans ce cas, afin d'optimiser la prédiction, de construire, lors d'une étape 203, un autre ensemble de vecteurs mouvement candidats non égaux, à partir de *p1* (=*p2*) et d'au moins un autre vecteur mouvement *p3* issu de l'ensemble E.

Ce sous-ensemble, noté sous-ensemble de détection optimale, comprend par exemple les vecteurs *p1* (=*p2*) et *p3*, où *p3* est par exemple associé au bloc (T) de l'image de référence (cf figure 1b). De la même manière que pour le choix des deux premiers vecteurs mouvement *p1* et *p2*, le choix de *p3* est prédéterminé et connu du décodeur.

La sélection du vecteur mouvement à coder, pour le bloc considéré, est ensuite effectuée lors d'une étape 21 précédemment décrite en relation avec la figure 2a, à partir de ce sous-ensemble de détection optimale. Le vecteur *p* sélectionné est donc soit le vecteur *p1*, soit le vecteur *p3*.

En revanche, dans un second cas, si *p1* et *p2* ne sont pas égaux, l'étape de construction 202 délivre un sous-ensemble de détection optimale comprenant les vecteurs *p1* et *p2*.

La sélection du vecteur mouvement à coder, pour le bloc considéré, est ensuite effectuée lors d'une étape 21 précédemment décrite en relation avec la figure 2a, à partir de ce sous-ensemble de détection optimale. Le vecteur *p* sélectionné est donc soit le vecteur *p1*, soit le vecteur *p2*.

Dans les deux cas précédents, une étape 22 d'insertion dans le signal d'une information de désignation de ce vecteur mouvement *p* sélectionné, telle que décrite précédemment en relation avec la figure 2a, est mise en oeuvre, afin de permettre au dispositif de décodage de sélectionner également ce vecteur mouvement, pour le décodage du bloc considéré.

Selon une deuxième variante de ce mode de réalisation, l'étape de comparaison 201 consiste en un test de proximité des deux premiers vecteurs mouvement *p1* et *p2*.

Ce test de proximité peut consister à comparer la différence entre les premiers vecteurs candidats avec un premier seuil prédéterminé. Ce seuil est défini de façon concerté entre le codeur et le décodeur, et peut être variable au sein d'une image.

Ainsi, on considère que si *p1* et *p2* sont proches, l'étape 21 de mise en compétition de ces deux vecteurs n'est pas optimale du fait de la proximité des vecteurs *p1* et *p2*. Il est donc également intéressant dans ce cas, afin d'optimiser la prédiction, de construire, lors d'une étape 203, un autre ensemble de vecteurs mouvement candidats non proches, à partir de *p1* (ou de *p2*, ou encore d'une moyenne des amplitudes des vecteurs mouvement *p1* et *p2*) et d'au moins un autre vecteur mouvement *p3* issu de l'ensemble E.

Les étapes suivantes 21 et 22 sont les mêmes que celles décrites précédemment pour la première variante.

Selon une troisième variante (non illustrée sur les figures), un test supplémentaire est mis en oeuvre avant la construction du sous-ensemble de détection optimale, afin d'écarter certains vecteurs mouvement candidats présents dans l'ensemble E, du fait de leur trop grand éloignement par rapport au premier vecteur mouvement *p1*.

Ainsi, si l'on se place dans le cas où les deux premiers vecteurs *p1* et *p2* sont égaux ou proches, un troisième vecteur *p3* est choisi pour construire le sous-ensemble de détection optimale, selon les étapes décrites ci-dessus. Comme déjà indiqué, ce choix est prédéfini et peut par exemple consister à choisir *p3* comme étant le vecteur mouvement associé au bloc (T) de l'image de référence.

Cependant, dans certains cas particuliers, il peut s'avérer que *p3* et *p1* soient trop éloignés, ou trop proches, pour que leur mise en compétition soit représentative.

Cette variante de réalisation du procédé de codage de l'invention permet de remédier à ces cas particuliers, en rejetant, ou invalidant, le vecteur *p3* comme vecteur mouvement candidat et en prenant optionnellement un autre vecteur *p4*, préalablement défini également, pour construire, avec *p1*, le sous-ensemble de détection optimale.

Ce test supplémentaire peut donc par exemple consister en une comparaison des valeurs de *p1* et *p3,* et engendrer un rejet de *p3* si le résultat de la comparaison est supérieur, ou inférieur, à un seuil prédéterminé.

Ce test supplémentaire peut également consister en une comparaison de l'amplitude du vecteur *p3* avec un seuil prédéterminé et engendrer un rejet de *p3* si l'amplitude du vecteur *p3* est supérieure, ou inférieure, à ce seuil prédéterminé.

Par exemple, ce seuil prédéterminé peut s'écrire de la façon suivante : $\sqrt{(\frac{(1-p)}{p})}$ , ou p correspond à la probabilité de choisir le vecteur mouvement candidat *p3* lors de la mise en compétition de *p1* et *p3,* cette probabilité pouvant être variable par apprentissage.

Cette variante permet d'obtenir encore une meilleure efficacité de prédiction.

Selon une quatrième variante, si *p1* ou *p2* ne sont pas disponibles (par exemple, dans le cas où le bloc courant est situé sur le bord gauche de l'image, alors le bloc (A) n'existe pas donc aucun vecteur mouvement associé à ce bloc (A) n'est disponible, ou alors dans le cas où le bloc (A) a été codé en mode « intra », ou bien en mode « inter » mais en utilisant une image de référence différente, etc), alors un sous-ensemble de détection optimale est directement construit à partir de *p2* et *p3,* si *p1* n'est pas disponible, ou à partir de *p1* et *p3* si *p2* n'est pas disponible.

Selon un deuxième mode de réalisation, non représenté sur les figures, il est possible d'itérer l'étape de comparaison des vecteurs mouvement candidats, de façon à optimiser au maximum la construction du sous-ensemble de détection optimale.

Par exemple, si l'on considère que les deux premiers vecteurs mouvement *p1* et *p2* sont égaux ou proches, alors un sous-ensemble comprenant le vecteur *p1* et un autre vecteur *p3* est construit, selon le mode de réalisation décrit ci-dessus. Selon ce précédent mode de réalisation, la sélection du vecteur mouvement à coder pour le bloc courant est faite parmi ces deux vecteurs *p1* et *p3*.

En revanche, dans ce second mode de réalisation, les deux vecteurs *p1* et *p3* sont à nouveau comparés, de manière à construire un autre sous-ensemble de détection optimale dans le cas où *p1* et *p3* sont égaux ou proches (selon le critère considéré). Dans ce cas, un vecteur mouvement *p4* peut être utilisé pour construire le sous-ensemble de détection optimale, avec *p1* (=*p2*=*p3*).

Ainsi, cette itération permet d'éviter, dans la mesure du possible et en fonction du nombre de vecteurs mouvement disponibles dans l'ensemble E, de mettre en oeuvre l'étape de sélection 21 pour un ensemble comprenant deux vecteurs mouvement candidats égaux ou proches, afin d'optimiser la mise en compétition des vecteurs mouvement candidats.

Le nombre d'itérations peut être prédéfini, et donc connu du décodeur, ou alors il peut être décidé que tant que les deux vecteurs sélectionnés sont égaux ou proches, une itération supplémentaire est mise en oeuvre, jusqu'à épuisement du nombre de vecteurs mouvement candidats disponibles dans E.

Il est à noter que dans certains cas particuliers, pour un ou plusieurs blocs de l'image à coder, où la désignation du vecteur mouvement est immédiate, on peut s'abstenir de transmettre une information de désignation du vecteur mouvement de prédiction à utiliser. Ces cas particuliers correspondent par exemple aux cas où les vecteurs mouvement candidats dans E sont tous identiques, ou bien aux cas où seul un vecteur mouvement est disponible.

Les différents modes de réalisation précédemment décrits, ainsi que leurs variantes, permettent d'obtenir un codage utilisant potentiellement trois vecteurs mouvement candidats pour la mise en compétition, tout en ayant un coût de codage correspondant à l'utilisation de deux vecteurs mouvement candidats. Ceci est possible du fait que le décodeur sera capable de reproduire la démarche effectuée au codage (test 201 notamment), comme expliqué ci-après, et qu'il n'est en conséquence pas nécessaire de transmettre une information correspondante.

On rappelle que l'invention peut également mettre en oeuvre des sous-ensemble de détection optimale comprenant plus de deux vecteurs mouvement candidats, la sélection du vecteur mouvement à coder pour le bloc courant se faisant parmi plus de deux vecteurs, et l'information de signalisation du vecteur choisi ayant un coût relatif au nombre de vecteurs mouvement candidats. Cependant, là encore, l'invention permet d'obtenir un codage utilisant potentiellement un nombre de vecteurs mouvement candidats supérieur à l'art antérieur, sans augmenter le coût de codage.

De plus, le procédé de codage selon l'invention permet d'adapter localement, c'est-à-dire pour chaque bloc à coder d'une image, le sous-ensemble de prédiction optimale à utiliser pour la mise en compétition des vecteurs mouvement candidats.

*5.3 Description de modes de réalisation du procédé de décodage*

Le principe de l'invention repose sur la mise en oeuvre, au codage et au décodage, d'une même méthode de sélection d'un vecteur mouvement pour un bloc considéré.

On décrit donc maintenant les principales étapes du procédé de décodage selon l'invention, en relation avec les figures 3a et 3b, pour un signal comprenant des informations de mouvement codées selon un mode de réalisation du procédé de codage de l'invention tel que précédemment décrit.

Comme illustré en figure 3a, et comme décrit précédemment en relation avec les figures 2a et 2b de procédé de codage, pour un bloc courant d'une image à décoder, un ensemble E de vecteurs mouvement candidats (*p1*, *p2*, *p3*, ...) est disponible, afin de sélectionner le vecteur mouvement à décoder pour le bloc considéré.

Une première étape 30 de détermination d'un sous-ensemble de vecteurs mouvement candidats, à partir de l'ensemble E, est mise en oeuvre, délivrant un sous-ensemble de détection optimale. Cette étape 30 de détermination est décrite plus en détails ci-dessous, en relation avec la figure 3b, et correspond à l'étape 20 du procédé de codage.

Une étape 31 de lecture délivre une information désignant le vecteur mouvement sélectionné p au codage, cette information étant insérée dans le signal au codage, tel que décrit ci-dessus (étape 22 du procédé de codage).

Cette information permet au dispositif de décodage de sélectionner, lors d'une étape 32, le vecteur mouvement de prédiction à utiliser pour décoder le bloc considéré, parmi les vecteurs mouvement candidats présents dans le sous-ensemble de détection optimale déterminé à l'étape 30 du procédé de décodage.

Les différentes sous-étapes permettant la construction du sous-ensemble de détection optimale sont illustrées plus en détail à la figure 3b, et ont déjà été décrites précédemment, en relation avec la figure 2b.

En effet, les étapes 301, 302 et 303 du procédé de décodage correspondent respectivement aux étapes 201, 202 et 203 du procédé de codage.

Notamment, plusieurs variantes du procédé de décodage selon l'invention peuvent être mises en oeuvre, selon que le critère de comparaison est basé sur une égalité ou une proximité, ou selon la mise en oeuvre ou non d'une itération de l'étape 301 de comparaison, etc.

Ainsi, le sous-ensemble de sélection optimale déterminé par le procédé de décodage selon ce mode de réalisation de l'invention, correspond au sous-ensemble de détection optimale obtenu au codage.

De cette manière, avec ce sous-ensemble de détection optimale (comprenant les vecteurs *p1* et *p2*, ou *p1* et *p3* par exemple) et l'information désignant le vecteur mouvement sélectionné et donc à utiliser, lue lors de l'étape 31, le procédé de décodage peut sélectionner le bon vecteur mouvement pour le décodage du bloc considéré, lors de l'un des étapes 32.

*5.4 Structure des dispositifs de codage et de décodage*

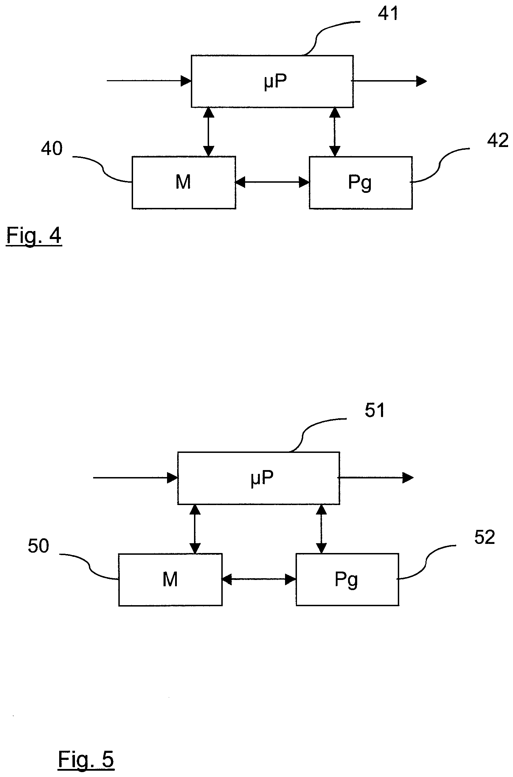

On présente finalement, en relation avec les figures 4 et 5, la structure simplifiée d'un dispositif de codage et d'un dispositif de décodage selon les modes de réalisation décrits ci-dessus.

Comme illustré en figure 4, un tel dispositif de codage comprend une mémoire 41 comprenant une mémoire tampon, une unité de traitement 42, équipée par exemple d'un microprocesseur $\mu$P, et pilotée par le programme d'ordinateur 43, mettant en oeuvre le procédé de codage selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée un signal d'images comprenant des informations de mouvement, parmi lesquelles un ensemble d'au moins trois vecteurs mouvement candidats. Le microprocesseur de l'unité de traitement 42 met en oeuvre les étapes du procédé de codage décrit précédemment, selon les instructions du programme d'ordinateur 43, pour sélectionner un vecteur mouvement. Pour cela, le dispositif de codage comprend, outre la mémoire tampon 41, des moyens de détermination d'un sous-ensemble de sélection optimale, contenant une partie des vecteurs candidats, des moyens de sélection d'un vecteur mouvement parmi les vecteurs du sous-ensemble de sélection optimale, et des moyens d'insertion, dans le signal, d'une information de désignation du vecteur mouvement sélectionné parmi les vecteurs du sous-ensemble de sélection optimale. Ces moyens sont pilotés par le microprocesseur de l'unité de traitement 42. L'unité de traitement 42 transmet donc, à destination d'au moins un dispositif de décodage, un signal comprenant au moins une information de désignation du vecteur mouvement sélectionné.

Comme illustré en figure 5, un tel dispositif de décodage comprend quant à lui une mémoire 51 comprenant une mémoire tampon, une unité de traitement 52, équipée par exemple d'un microprocesseur $\mu$P, et pilotée par le programme d'ordinateur 53, mettant en oeuvre le procédé de décodage selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un signal comprenant notamment des informations de mouvement. Le microprocesseur de l'unité de traitement 52 met en oeuvre les étapes du procédé de décodage décrit précédemment, selon les instructions du programme d'ordinateur 53, pour sélectionner un vecteur mouvement. Pour cela, le dispositif de décodage comprend, outre la mémoire tampon 51, des moyens de détermination d'un sous-ensemble de sélection optimale, contenant une partie des vecteurs candidats, de façon similaire à une détermination mise en oeuvre au codage, des moyens de lecture d'une information de sélection fournie par le codage et désignant l'un des vecteurs du sous-ensemble de sélection optimale et des moyens de sélection du vecteur mouvement parmi les vecteurs du sous-ensemble de sélection optimale à partir de l'information de sélection lue. Ces moyens sont pilotés par le microprocesseur de l'unité de traitement 52.

## Revendications

1. Procédé de codage d'un signal d'images comprenant des informations de mouvement, par sélection d'un vecteur mouvement parmi un ensemble d'au moins trois vecteurs candidats, pour au moins un bloc courant d'une image courante à coder, comprenant une étape de détermination (20) d'un sous-ensemble de sélection optimale, contenant une partie desdits vecteurs candidats, une étape de sélection (21) dudit vecteur mouvement (*p*) parmi les vecteurs dudit sous-ensemble de sélection optimale, et une étape d'insertion (22), dans ledit signal, d'une information de désignation du vecteur mouvement sélectionné parmi les vecteurs dudit sous-ensemble de sélection optimale, **caractérisé en ce que** ladite étape de détermination comprend les sous-étapes suivantes :

    - comparaison (201) d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

        - si ladite information de proximité prend ladite première valeur, construction (203) dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
        - si ladite information de proximité prend ladite seconde valeur, construction (202) dudit sous-ensemble de sélection optimale avec lesdits premiers vecteurs candidats.

2. Procédé de codage selon la revendication 1, **caractérisé en ce que** lesdits premiers vecteurs candidats appartiennent à un sous-ensemble de vecteurs candidats associés à au moins un des blocs voisins dudit bloc courant, de position pré-identifiée dans l'espace et/ou dans le temps.

3. Procédé de codage selon la revendication 2, **caractérisé en ce que** ledit premier sous-ensemble comprend le vecteur candidat associé au bloc (A) situé directement à gauche dudit bloc courant dans l'image courante et le vecteur candidat associé au bloc (B) situé directement au-dessus dudit bloc courant dans l'image courante.

4. Procédé de codage selon la revendication 3, ledit second vecteur candidat est un vecteur associé à un bloc de l'image précédant l'image courante et situé à la même position que ledit bloc courant.

5. Procédé de codage selon la revendication 1, **caractérisé en ce que** ladite étape de comparaison est répétée au moins une fois, sur un second sous-ensemble comprenant un desdits premiers vecteurs candidats et au moins un second vecteur candidat, distinct desdits premiers vecteurs candidats.

6. Procédé de codage selon la revendication 1, **caractérisé en ce que** ladite étape de détermination d'un sous-ensemble de sélection optimale comprend une sous-étape de rejet d'un vecteur candidat si ce dernier présente une différence avec au moins un autre vecteur candidat supérieure à un deuxième seuil prédéterminé.

7. Programme d'ordinateur comportant des instructions pour la mise en oeuvre du procédé de codage selon l'une quelconque des revendications 1 à 6, lorsque ledit programme est exécuté par un processeur.

8. Dispositif de codage d'un signal d'images comprenant des informations de mouvement, par sélection d'un vecteur mouvement parmi un ensemble d'au moins trois vecteurs candidats, pour au moins un bloc courant d'une image courante à coder, comprenant des moyens de détermination d'un sous-ensemble de sélection optimale, contenant une partie desdits vecteurs candidats, des moyens de sélection dudit vecteur mouvement parmi les vecteurs dudit sous-ensemble de sélection optimale, et des moyens d'insertion, dans ledit signal, d'une information de désignation du vecteur mouvement sélectionné parmi les vecteurs dudit sous-ensemble de sélection optimale, **caractérisé en ce que** lesdits moyens de détermination comprennent les moyens suivants :

   - des moyens de comparaison (201) d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

      - si ladite information de proximité prend ladite première valeur, des moyens de construction (203) dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
      - si ladite information de proximité prend ladite seconde valeur, des moyens de construction (202) dudit sous-ensemble de sélection optimale avec lesdits premiers vecteurs candidats.

9. Procédé de décodage d'informations de mouvement, par sélection d'un vecteur mouvement sélectionné au codage parmi un ensemble d'au moins trois vecteurs candidats, pour au moins un bloc courant d'une image courante à décoder, comprenant une étape de détermination (30) d'un sous-ensemble de sélection optimale, contenant une partie desdits vecteurs candidats, de façon similaire à une détermination mise en oeuvre au codage, une étape de lecture (31) d'une information de sélection fournie par le codage et désignant l'un des vecteurs dudit sous-ensemble de sélection optimale et une étape de sélection (32) dudit vecteur mouvement ($p$) parmi les vecteurs dudit sous-ensemble de sélection optimale à partir de ladite information de sélection lue, **caractérisé en ce que** ladite étape de détermination comprend les sous-étapes suivantes :

   - comparaison (301) d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

      - si ladite information de proximité prend ladite première valeur, construction (303) dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
      - si ladite information de proximité prend ladite seconde valeur, construction (302) dudit sous-ensemble de sélection optimale avec lesdits premiers vecteurs candidats.

10. Programme d'ordinateur comportant des instructions pour la mise en oeuvre du procédé de décodage selon la revendication 9, lorsque ledit programme est exécuté par un processeur.

11. Dispositif de décodage d'informations de mouvement, par sélection d'un vecteur mouvement sélectionné au codage parmi un ensemble d'au moins trois vecteurs candidats, pour au moins un bloc courant d'une image courante à décoder,
comprenant des moyens de détermination d'un sous-ensemble de sélection optimale, contenant une partie desdits vecteurs candidats, de façon similaire à une détermination mise en oeuvre au codage, des moyens de lecture d'une information de sélection fournie par le codage et désignant l'un des vecteurs dudit sous-ensemble de sélection optimale et des moyens de sélection dudit vecteur mouvement parmi les vecteurs dudit sous-ensemble de sélection optimale à partir de ladite information de sélection lue,
**caractérisé en ce que** lesdits moyens de détermination comprennent les moyens suivants :

des moyens de comparaison d'au moins deux premiers vecteurs candidats, délivrant une information de proximité entre lesdits premiers vecteurs candidats, pouvant prendre une première valeur indiquant que lesdits premiers vecteurs candidats sont identiques ou proches selon un critère prédéterminé, et une seconde valeur indiquant que lesdits premiers vecteurs candidats ne sont pas identiques ou proches selon ledit critère prédéterminé, la mise en oeuvre dudit critère prédéterminé appartenant au groupe comprenant l'égalité entre lesdits premiers vecteurs candidats et la comparaison de la différence entre lesdits premiers vecteurs candidats avec un premier seuil prédéterminé, la position dans l'espace et/ou dans le temps desdits premiers vecteurs candidats étant pré-identifiée,

- si ladite information de proximité prend ladite première valeur, des moyens de construction dudit sous-ensemble de sélection optimale avec un desdits premiers vecteurs candidats ou un vecteur d'amplitude correspondant à une moyenne des amplitudes desdits au moins deux premiers vecteurs candidats et au moins un second vecteur candidat, distinct desdits premiers vecteurs candidats ;
- si ladite information de proximité prend ladite seconde valeur, des moyens de construction dudit sous-ensemble de sélection optimale avec lesdits premiers vecteurs candidats.

**Patentansprüche**

1. Verfahren zum Codieren eines Bildsignals, das Bewegungsinformationen aufweist, durch Auswählen eines Bewegungsvektors aus einem Satz von mindestens drei Kandidatenvektoren für mindestens einen aktuellen Block eines aktuellen zu codierenden Bildes,
umfassend einen Schritt des Bestimmens (20) einer Teilmenge der optimalen Auswahl, die einen Teil der Kandidatenvektoren aufweist, einen Schritt des Auswählens (21) des Bewegungsvektors ($p$) unter den Vektoren der Teilmenge der optimalen Auswahl und einen Schritt des Einfügens (22) in das Signal einer Bezeichnungsinformation des Bewegungsvektors, der unter den Vektoren der Teilmenge der optimalen Auswahl ausgewählt wird,
**dadurch gekennzeichnet, dass** der Schritt des Bestimmens die folgenden Unterschritte aufweist:

- Vergleichen (201) von mindestens zwei ersten Kandidatenvektoren, wobei eine Information der Nähe zwischen den ersten Kandidatenvektoren ausgegeben wird, die einen ersten Wert, der angibt, dass die ersten Kandidatenvektoren nach einem vorbestimmten Kriterium gleich oder nahe sind, und einen zweiten Wert annehmen kann, der angibt, dass die ersten Kandidatenvektoren nach dem vorbestimmten Kriterium nicht gleich oder nahe sind, wobei das Einsetzen des vorbestimmten Kriteriums zu der Gruppe gehört, die die Gleichheit zwischen den ersten Kandidatenvektoren und das Vergleichen des Unterschieds zwischen den ersten Kandidatenvektoren mit einem ersten vorbestimmten Schwellenwert aufweist, wobei die räumliche und/oder zeitliche Position der ersten Kandidatenvektoren vorher identifiziert wird,
- wenn die Information der Nähe den ersten Wert annimmt, Erstellen (203) der Teilmenge der optimalen Auswahl mit einem der ersten Kandidatenvektoren oder einem Amplitudenvektor, der einem Durchschnitt der Amplituden der mindestens zwei ersten Kandidatenvektoren entspricht, und mindestens einem zweiten Kandidatenvektor, der von den ersten Kandidatenvektoren verschieden ist;
- wenn die Information der Nähe den zweiten Wert annimmt, Erstellen (202) der Teilmenge der optimalen Auswahl mit den ersten Kandidatenvektoren.

**2.** Verfahren zum Codieren nach Anspruch 1, **dadurch gekennzeichnet, dass** die ersten Kandidatenvektoren zu einer Teilmenge an Kandidatenvektoren, die mindestens einem der benachbarten Blöcke des aktuellen Blocks zugeordnet sind, mit vorher identifizierter räumlicher und/oder zeitlicher Position gehören.

**3.** Verfahren zum Codieren nach Anspruch 2, **dadurch gekennzeichnet, dass** die erste Teilmenge den Kandidatenvektor, der dem Block (A) zugeordnet ist, der direkt links von dem aktuellen Block in dem aktuellen Bild angeordnet ist, und den Kandidatenvektor aufweist, der dem Block (B) zugeordnet ist, der direkt über dem aktuellen Block in dem aktuellen Bild angeordnet ist.

**4.** Verfahren zum Codieren nach Anspruch 3, der zweite Kandidatenvektor ein Vektor ist, der einem Block des Bildes zugeordnet ist, der dem aktuellen Bild vorausgeht und in der gleichen Position wie der aktuelle Block angeordnet ist.

**5.** Verfahren zum Codieren nach Anspruch 1, **dadurch gekennzeichnet, dass** der Schritt des Vergleichens mindestens ein Mal an einer zweiten Teilmenge, die einen der ersten Kandidatenvektoren und mindestens einen zweiten Kandidatenvektor aufweist, der von den ersten Kandidatenvektoren verschieden ist, wiederholt wird.

**6.** Verfahren zum Codieren nach Anspruch 1, **dadurch gekennzeichnet, dass** der Schritt des Bestimmens einer Teilmenge der optimalen Auswahl mindestens einen Unterschritt des Ablehnens eines Kandidatenvektors aufweist, wenn dieser Letztere eine Differenz zu mindestens einem anderen Kandidatenvektor aufweist, die größer als ein zweiter vorbestimmter Schwellenwert ist.

**7.** Computerprogramm, das Anweisungen zum Umsetzen des Verfahrens zum Codieren nach einem der Ansprüche 1 bis 6 aufweist, wenn das Programm von einem Prozessor ausgeführt wird.

**8.** Vorrichtung zum Codieren eines Bildsignals, das Bewegungsinformationen aufweist, durch Auswählen eines Bewegungsvektors aus einem Satz von mindestens drei Kandidatenvektoren für mindestens einen aktuellen Block eines aktuellen zu codierenden Bildes, umfassend Mittel zum Bestimmen einer Teilmenge der optimalen Auswahl, die einen Teil der Kandidatenvektoren aufweist, Mittel zum Auswählen des Bewegungsvektors unter den Vektoren der Teilmenge der optimalen Auswahl und Mittel zum Einfügen in das Signal einer Bezeichnungsinformation des Bewegungsvektors, der unter den Vektoren der Teilmenge der optimalen Auswahl ausgewählt ist, **dadurch gekennzeichnet, dass** die Mittel zum Bestimmen die folgenden Mittel aufweisen:

- Mittel zum Vergleichen (201) von mindestens zwei ersten Kandidatenvektoren, wobei eine Information der Nähe zwischen den ersten Kandidatenvektoren ausgegeben wird, die einen ersten Wert, der angibt, dass die ersten Kandidatenvektoren nach einem vorbestimmten Kriterium gleich oder nahe sind, und einen zweiten Wert annehmen kann, der angibt, dass die ersten Kandidatenvektoren nach dem vorbestimmten Kriterium nicht gleich oder nahe sind, wobei das Einsetzen des vorbestimmten Kriteriums zu der Gruppe gehört, die die Gleichheit zwischen den ersten Kandidatenvektoren und das Vergleichen der Differenz zwischen den ersten Kandidatenvektoren mit einem ersten vorbestimmten Schwellenwert aufweist, wobei die räumliche und/oder zeitliche Position der ersten Kandidatenvektoren vorher identifiziert wird,
- wenn die Information der Nähe den ersten Wert annimmt, Mittel zum Erstellen (203) der Teilmenge der optimalen Auswahl mit einem der ersten Kandidatenvektoren oder einem Amplitudenvektor, der einem Durchschnitt der Amplituden der mindestens zwei Kandidatenvektoren entspricht, und mindestens einem zweiten Kandidatenvektor, der von den ersten Kandidatenvektoren verschieden ist;
- wenn die Information der Nähe den zweiten Wert annimmt, Mittel zum Erstellen (202) der Teilmenge der optimalen Auswahl mit den ersten Kandidatenvektoren.

**9.** Verfahren zum Decodieren von Bewegungsinformationen durch Auswahl eines Bewegungsvektors, der beim Codieren aus einem Satz von mindestens drei Kandidatenvektoren für mindestens einen aktuellen Block eines aktuellen zu decodierenden Bildes ausgewählt wird, umfassend einen Schritt des Bestimmens (30) einer Teilmenge der optimalen Auswahl, die einen Teil der Kandidatenvektoren aufweist, in ähnlicher Weise wie ein Bestimmen, das beim Codieren umgesetzt wird, einen Schritt des Lesens (31) einer Auswahlinformation, die von dem Codieren bereitgestellt wird und einen der Vektoren der Teilmenge der optimalen Auswahl bezeichnet, und einen Schritt des Auswählens (32) des Bewegungsvektors (p) unter den Vektoren der Teilmenge der optimalen Auswahl ausgehend von der gelesenen Auswahlinformation, **dadurch gekennzeichnet, dass** der Schritt des Bestimmens die folgenden Unterschritte aufweist:

- Vergleichen (301) von mindestens zwei ersten Kandidatenvektoren, wobei eine Information der Nähe zwischen den ersten Kandidatenvektoren ausgegeben wird, die einen ersten Wert, der angibt, dass die ersten Kandidatenvektoren nach einem vorbestimmten Kriterium gleich oder nahe sind, und einen zweiten Wert annehmen kann, der angibt, dass die ersten Kandidatenvektoren nach dem vorbestimmten Kriterium nicht gleich oder nahe sind, wobei das Einsetzen des vorbestimmten Kriteriums zu der Gruppe gehört, die die Gleichheit zwischen den ersten Kandidatenvektoren und das Vergleichen der Differenz zwischen den ersten Kandidatenvektoren mit einem ersten vorbestimmten Schwellenwert aufweist, wobei die räumliche und/oder zeitliche Position der ersten Kandidatenvektoren vorher identifiziert wird,

- wenn die Information der Nähe den ersten Wert annimmt, Erstellen (303) der Teilmenge der optimalen Auswahl mit einem der ersten Kandidatenvektoren oder einem Amplitudenvektor, der einem Durchschnitt der Amplituden der mindestens zwei ersten Kandidatenvektoren entspricht, und mindestens einem zweiten Kandidatenvektor, der von den ersten Kandidatenvektoren verschieden ist;

- wenn die Information der Nähe den zweiten Wert annimmt, Erstellen (302) der Teilmenge der optimalen Auswahl mit den ersten Kandidatenvektoren.

10. Computerprogramm, das Anweisungen zum Umsetzen des Verfahrens zum Decodieren nach Anspruch 9 aufweist, wenn das Programm von einem Prozessor ausgeführt wird.

11. Vorrichtung zum Decodieren von Bewegungsinformationen durch Auswahl eines Bewegungsvektors, der beim Codieren aus einem Satz von mindestens drei Kandidatenvektoren für mindestens einen aktuellen Block eines aktuellen zu decodierenden Bildes ausgewählt wird,
umfassend Mittel zum Bestimmen einer Teilmenge der optimalen Auswahl, die einen Teil der Kandidatenvektoren aufweist, in ähnlicher Weise wie ein Bestimmen, das beim Codieren umgesetzt wird, Mittel zum Lesen einer Auswahlinformation, die von dem Codieren bereitgestellt wird und einen der Vektoren der Teilmenge der optimalen Auswahl bezeichnet, und Mittel zum Auswählen des Bewegungsvektors unter den Vektoren der Teilmenge der optimalen Auswahl ausgehend von der gelesenen Auswahlinformation,
**dadurch gekennzeichnet, dass** die Mittel zum Bestimmen die folgenden Mittel aufweisen:

- Mittel zum Vergleichen von mindestens zwei ersten Kandidatenvektoren, wobei eine Information der Nähe zwischen den ersten Kandidatenvektoren ausgegeben wird, die einen ersten Wert, der angibt, dass die ersten Kandidatenvektoren nach einem vorbestimmten Kriterium gleich oder nahe sind, und einen zweiten Wert annehmen kann, der angibt, dass die ersten Kandidatenvektoren nach dem vorbestimmten Kriterium nicht gleich oder nahe sind, wobei das Einsetzen des vorbestimmten Kriteriums zu der Gruppe gehört, die die Gleichheit zwischen den ersten Kandidatenvektoren und das Vergleichen der Differenz zwischen den ersten Kandidatenvektoren mit einem ersten vorbestimmten Schwellenwert aufweist, wobei die räumliche und/oder zeitliche Position der ersten Kandidatenvektoren vorher identifiziert wird,

- wenn die Information der Nähe den ersten Wert annimmt, Mittel zum Erstellen der Teilmenge der optimalen Auswahl mit einem der ersten Kandidatenvektoren oder einem Amplitudenvektor, der einem Durchschnitt der Amplituden der mindestens zwei Kandidatenvektoren entspricht, und mindestens einem zweiten Kandidatenvektor, der von den ersten Kandidatenvektoren verschieden ist;

- wenn die Information der Nähe den zweiten Wert annimmt, Mittel zum Erstellen der Teilmenge der optimalen Auswahl mit den ersten Kandidatenvektoren.

## Claims

1. Method for coding an image signal comprising motion information, by selection of a motion vector from a set of at least three candidate vectors, for at least one current block of a current image to be coded, comprising a step of determination (20) of an optimal selection subset, comprising some of said candidate vectors, a step of selection (21) of said motion vector ($p$) from the vectors of said optimal selection subset, and a step of insertion (22), into said signal, of information designating the motion vector selected from the vectors of said optimal selection subset, **characterized in that** said determination step comprises the following substeps:

- comparison (201) of at least two first candidate vectors, delivering information on proximity between said first candidate vectors, that can take a first value indicating that said first candidate vectors are identical or close according to a predetermined criterion, and a second value indicating that said first candidate vectors are not identical or close according to said predetermined criterion, the implementation of said predetermined criterion belonging to the group comprising equality between said first candidate vectors and the comparison of the difference between said first candidate vectors with a first predetermined threshold, the position in space and/or in time of said first candidate vectors being pre-identified,

> - if said proximity information takes said first value, construction (203) of said optimal selection subset with one of said first candidate vectors or a vector of amplitude corresponding to an average of the amplitudes of said at least two first candidate vectors and at least one second candidate vector, distinct from said first candidate vectors;
> - if said proximity information takes said second value, construction (202) of said optimal selection subset with said first candidate vectors.

2. Coding method according to Claim 1, **characterized in that** said first candidate vectors belong to a subset of candidate vectors associated with at least one of the blocks neighbouring said current block, of pre-identified position in space and/or in time.

3. Coding method according to Claim 2, **characterized in that** said first subset comprises the candidate vector associated with the block (A) situated directly to the left of said current block in the current image and the candidate vector associated with the block (B) situated directly above said current block in the current image.

4. Coding method according to Claim 3, said second candidate vector is a vector associated with a block of the image preceding the current image and situated in the same position as said current block.

5. Coding method according to Claim 1, **characterized in that** said comparison step is repeated at least once, on a second subset comprising one of said first candidate vectors and at least one second candidate vector, distinct from said first candidate vectors.

6. Coding method according to Claim 1, **characterized in that** said step of determination of an optimal selection subset comprises a sub-step of rejection of a candidate vector if the latter exhibits a difference with at least one other candidate vector above a second predetermined threshold.

7. Computer program comprising instructions for the implementation of the coding method according to any one of Claims 1 to 6, when said program is run by a processor.

8. Device for coding an image signal comprising motion information, by selection of a motion vector from a set of at least three candidate vectors, for at least one current block of a current image to be coded, comprising means for determining an optimal selection subset, containing some of said candidate vectors, means for selecting said motion vector from the vectors of said optimal selection subset, and means for inserting, into said signal, information designating the motion vector selected from the vectors of said optimal selection subset, **characterized in that** said determination means comprise the following means:

> - means (201) for comparing at least two first candidate vectors, delivering information on proximity between said first candidate vectors, that can take a first value indicating that said first candidate vectors are identical or close according to a predetermined criterion, and a second value indicating that said first candidate vectors are not identical or close according to said predetermined criterion, the implementation of said predetermined criterion belonging to the group comprising equality between said first candidate vectors and the comparison of the difference between said first candidate vectors with a first predetermined threshold, the position in space and/or in time of said first candidate vectors being pre-identified,
> - if said proximity information takes said first value, means (203) for constructing said optimal selection subset with one of said first candidate vectors or a vector of amplitude corresponding to an average of the amplitudes of said at least two first candidate vectors and at least one second candidate vector, distinct from said first candidate vectors;
> - if said proximity information takes said second value, means (202) for constructing said optimal selection subset with said first candidate vectors.

9. Method for decoding motion information, by selection of a motion vector selected in coding from a set of at least three candidate vectors, for at least one current block of a current image to be decoded, comprising a step of determination (30) of an optimal selection subset, containing some of said candidate vectors, in a manner similar to a determination implemented in coding, a step of reading (31) of selection information supplied by the coding and designating one of the vectors of said optimal selection subset and a step of selection (32) of said motion vector (*p*) from the vectors of said optimal selection subset on the basis of said selection information read, **characterized in that** said determination step comprises the following substeps:

> - comparison (301) of at least two first candidate vectors, delivering information on proximity between said first candidate vectors, that can take a first value indicating that said first candidate vectors are identical or close according to a predetermined criterion, and a second value indicating that said first candidate vectors are not identical or close according to said predetermined criterion, the implementation of said predetermined criterion belonging to the group comprising equality between said first candidate vectors and the comparison of the difference between said first candidate vectors with a first predetermined threshold, the position in space and/or in time of said first candidate vectors being pre-identified,

- if said proximity information takes said first value, construction (303) of said optimal selection subset with one of said first candidate vectors or a vector of amplitude corresponding to an average of the amplitudes of said at least two first candidate vectors and at least one second candidate vector, distinct from said first candidate vectors;
- if said proximity information takes said second value, construction (302) of said optimal selection subset with said first candidate vectors.

10. Computer program comprising instructions for the implementation of the decoding method according to Claim 9, when said program is run by a processor.

11. Device for decoding motion information, by selection of a motion vector selected in coding from a set of at least three candidate vectors, for at least one current block of a current image to be decoded, comprising means for determining an optimal selection subset, comprising some of said candidate vectors, in a manner similar to a determination implemented in coding, means for reading selection information supplied by the coding and designating one of the vectors of said optimal selection subset and means for selecting said motion vector from the vectors of said optimal selection subset on the basis of said selection information read, **characterized in that** said determination means comprise the following means:

means for comparing at least two first candidate vectors, delivering information on proximity between said first candidate vectors, that can take a first value indicating that said first candidate vectors are identical or close according to a predetermined criterion, and a second value indicating that said first candidate vectors are not identical or close according to said predetermined criterion, the implementation of said predetermined criterion belonging to the group comprising equality between said first candidate vectors and the comparison of the difference between said first candidate vectors with a first predetermined threshold, the position in space and/or in time of said first candidate vectors being pre-identified,

- if said proximity information takes said first value, means for constructing said optimal selection subset with one of said first candidate vectors or a vector of amplitude corresponding to an average of the amplitudes of said at least two first candidate vectors and at least one second candidate vector, distinct from said first candidate vectors;
- if said proximity information takes said second value, means for constructing said optimal selection subset with said first candidate vectors.

Fig. 1a

Fig. 1b

$E=(p1, p2, p3 ...)$

Fig. 2a

$E=(p1, p2, p3 ...)$

p1 ? p2

KO 202

OK 203

201

(p1, p2) 21

(p1, p3) 21

p 22

Fig. 2b

E=(*p1, p2, p3* ...)

30

31

32

*p*

Fig. 3a

E=(*p1, p2, p3* ...)

301

302      KO      *p1 ? p2*      OK      303

31

(*p1, p2*)                              (*p1, p3*)

32                                      32

*p*

Fig. 3b

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008082158 A

**Littérature non-brevet citée dans la description**

- **J. JUNG ; G. LAROCHE.** Competition-Based Scheme for Motion Vector Selection and Coding. *ITU-T VCEG, AC06,* Juillet 2006